# EUROPEAN PATENT APPLICATION

(11) **EP 4 726 858 A1**
(43) Date of publication of application: **15.04.2026**
(21) Application number: 24862969.3
(22) Date of filing: 17.06.2024
(51) Int. Cl.: H01M 10/613, H01M 50/207, H01M 10/6556, H01M 10/6551, H01M 50/211, H01M 50/184, H01M 50/251, H01M 50/105

(54) **BATTERY ASSEMBLY**

(30) Priority: 07.09.2023 KR 20230119301; 14.12.2023 KR 20230182352
(71) Applicant: LG Energy Solution, Ltd., Seoul 07335 (KR)
(72) Inventor: JEONG, Chan-Young, Daejeon 34122 (KR); SIM, Chang-Hwi, Daejeon 34122 (KR); OK, Seung-Min, Daejeon 34122 (KR); LEE, Jeong-Won, Daejeon 34122 (KR); JO, Sang-Hyun, Daejeon 34122 (KR); CHOI, Yeo-Joo, Daejeon 34122 (KR)
(74) Representative: BCKIP Part mbB
(86) International application number: PCT/KR2024/008352
(87) International publication number: WO 2025/053386

(57) **Abstract**

A battery assembly is disclosed. The battery assembly according to an embodiment of the present disclosure includes a plurality of battery cells stacked in a left-right direction, each battery cell including a receiving portion having an electrode assembly and a sealing portion extended frontward from the receiving portion; an upper plate having a flat portion on which the plurality of battery cells is placed and a main groove extended in the left-right direction and accommodating at least part of the sealing portion; and a lower plate coupled to a lower surface of the upper plate.

## Description

### TECHNICAL FIELD

The present disclosure relates to a battery assembly.

The present application claims priority to Korean Patent Application No. 10-2023-0119301 filed on September 7, 2023 and Korean Patent Application No. 10-2023-0182352 filed on December 14, 2023 in the Republic of Korea, the disclosures of which are incorporated herein by reference.

### BACKGROUND

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, with the emerging issues such as a lack of power or eco-friendly energy, Energy Storage Systems (ESS) used to store power for later use are gaining more attention. For example, one of proposed methods for controlling power supply is smart grid systems. The power usage is not constant and can change at any time. Typically, the power usage sharply increases in the summer daytime due to the use of cooling devices and sharply decreases in the nighttime. From the perspective of power consumption, power consumption is not constant and may frequently change, but from the perspective of power supply, the amount of power produced can be controlled to some extent, but in reality, it is difficult to meet the amount of power required. Accordingly, power oversupply or power shortage may occur due to the inequality in power supply and power consumption, and to solve this problem, the smart grid systems may flexibly store and control power. The concept of smart grid systems is that power is stored in times or regions in which surplus power occurs and the stored power is supplied in times and regions in which power shortage occurs. One of the essential elements for building the smart grid systems may be energy storage systems for storing power. More recently, with the widespread use of electric vehicles, energy storage systems may be used in facilities for charging the electric vehicles, for example, charging stations.

The energy storage system may include a plurality of battery assemblies. The battery assembly may include a plurality of battery cells. In the process of manufacturing the battery cell, a protruding portion may be formed from a part of a case sealing an electrode assembly. In this instance, friction or interference may occur between the protruding portion and its adjacent components, causing damage to the battery cell. Accordingly, thermal safety of the battery assembly may degrade. Accordingly, there is a need for a structure for preventing friction or interference between the protruding portion of the battery cell and the adjacent components.

### SUMMARY

### Technical Problem

An object of the present disclosure is to solve these and other problems.

Another object of the present disclosure is to provide a battery assembly including a structure in which a plurality of battery cells is received without damage.

Still another object of the present disclosure is to provide a battery assembly for preventing damage to a plurality of battery cells and improving cooling efficiency.

### Technical Solution

To achieve the above-described objects, a battery assembly according to an embodiment of the present disclosure includes a plurality of battery cells stacked in a left-right direction, each battery cell including a receiving portion having an electrode assembly and a sealing portion extended frontward from the receiving portion; an upper plate having a flat portion on which the plurality of battery cells is placed and a main groove extended in the left-right direction and accommodating at least part of the sealing portion; and a lower plate coupled to a lower surface of the upper plate.

Additionally, a cooling channel may be formed between the upper plate and the lower plate.

Additionally, the main groove may protrude downward, and the lower plate may have a coupling groove accommodating the main groove.

Additionally, the lower plate may have a first groove extended in a front-rear direction, and a cooling channel may be formed between the main groove and the first groove.

Additionally, the upper plate may include a port in communication with the first groove.

Additionally, the lower plate may have a plurality of second grooves extended in the left-right direction and arranged in a front-rear direction, and the cooling channel may be formed between the upper plate and the plurality of second grooves.

Additionally, the main groove may be located between adjacent second grooves among the plurality of second grooves.

Additionally, the plurality of second grooves and the first groove may be in communication with each other.

Additionally, the sealing portion may have a protruding portion protruded downward and received in the main groove.

Additionally, the battery assembly may further include a connection member disposed between the plurality of battery cells and the upper plate.

Additionally, the battery assembly may further include a side wall coupled to the upper plate, and having a protrusion which is received in the main groove.

Additionally, the battery assembly may further include a pair of side walls coupled to the upper plate, and the plurality of battery cells and the main groove may be located between the pair of side walls.

A battery container according to an aspect of the present disclosure may include the battery assembly of the present disclosure.

An energy storage system according to an aspect of the present disclosure may include the battery assembly of the present disclosure.

### Advantageous Effects

According to at least one of the embodiments of the present disclosure, it may be possible to improve thermal safety of the battery assembly.

According to at least one of the embodiments of the present disclosure, it may be possible to prevent damage to the sealing portion of the battery cell.

According to at least one of the embodiments of the present disclosure, it may be possible to improve cooling efficiency of the battery assembly.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a diagram showing a battery assembly according to an embodiment of the present disclosure.
FIG. 2 is an exploded view showing some components of the battery assembly of FIG. 1.
FIG. 3 is a diagram showing a battery cell of the battery assembly of FIG. 1.
FIG. 4 is a diagram showing a heat sink of the battery assembly of FIG. 1.
FIG. 5 is an exploded view showing some components of the heat sink of FIG. 4.
FIG. 6 is a diagram showing a flow of cooling fluid in FIG. 5.
FIG. 7 is an enlarged view of section E in FIG. 5.
FIG. 8 is a cross-sectional view of FIG. 4, taken along the line K-K'.
FIG. 9 is an enlarged view of section M in FIG. 8.
FIG. 10 is a cross-sectional view of FIG. 4, taken along the line C-C'.
FIG. 11 is an enlarged view of section F in FIG. 10.
FIG. 12 is a cross-sectional view of FIG. 4, taken along the line L-L'.
FIG. 13 is an enlarged view of section N in FIG. 12.
FIG. 14 is a cross-sectional view of FIG. 4, taken along the line D-D'.
FIG. 15 is an enlarged view of section G in FIG. 14.
FIG. 16 is a diagram showing a heat sink and a connection member of the battery assembly of FIG. 1.
FIG. 17 is a cross-sectional view of FIG. 1, taken along the line A-A'.
FIG. 18 is an enlarged view of section H in FIG. 17.
FIG. 19 is an enlarged view of section I in FIG. 17.
FIG. 20 is a cross-sectional view of FIG. 1, taken along the line B-B'.
FIG. 21 is an enlarged view of section J in FIG. 20.
FIG. 22 is an enlarged view of section P in FIG. 1.
FIG. 23 is a diagram showing a variation of FIG. 22.
FIG. 24 is a diagram showing a heat sink of a battery assembly according to another embodiment of the present disclosure.
FIG. 25 is an exploded view showing some components of the heat sink of FIG. 24.
FIG. 26 is an exploded view showing some components of a battery assembly according to another embodiment of the present disclosure.
FIG. 27 is a diagram showing a battery assembly according to another embodiment of the present disclosure.
FIG. 28 is an enlarged view of section Q in FIG. 27.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure but not intended to be limiting, and thus it should be understood that a variety of other equivalents and modifications could have been made at the time that the application was filed.

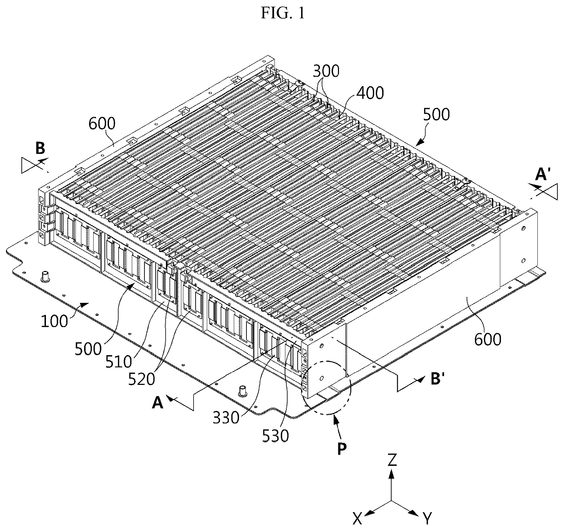

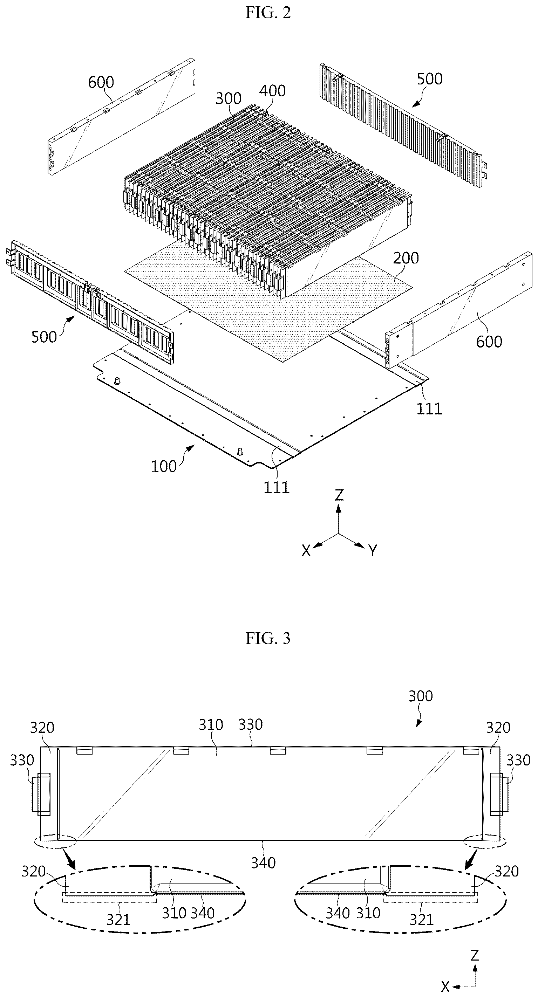

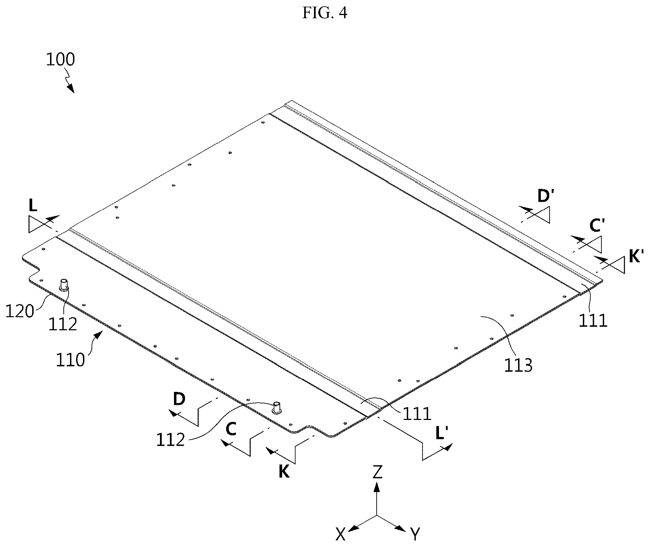

FIG. 1 is a diagram showing a battery assembly according to an embodiment of the present disclosure. FIG. 2 is an exploded view showing some components of the battery assembly of FIG. 1. FIG. 3 is a diagram showing a battery cell of the battery assembly of FIG. 1. FIG. 4 is a diagram showing a heat sink 100 of the battery assembly of FIG. 1.

Referring to FIGs. 1 to 4, the battery assembly according to an embodiment of the present disclosure may include a battery cell 300, an upper plate 110 and a lower plate 120. The battery cell 300 may refer to a secondary battery.

The battery cell 300 may be a battery cell 300 having a pouch shape. The battery cell 300 may include a plurality of battery cells. The battery cell 300 may be extended in the front-rear direction or X axis direction. The battery cell 300 may include a receiving portion 310 having an electrode assembly. The receiving portion 310 may have a rectangular parallelepiped shape. A case may accommodate the electrode assembly. The case may cover the electrode assembly, and the case may be folded once so that the electrode assembly is received in the case. A sealing portion 320 may be extended from the receiving portion 310. The sealing portion 320 may be extended frontward and rearward from the receiving portion 310 and upward from the receiving portion 310. A lower surface of the receiving portion 310 may be referred to as a folding portion 340. The folding portion 340 may be formed by folding the case.

In this instance, the lower ends of the front sealing portion 320 and the rear sealing portion 320 may protrude downward. The front sealing portion 320 and the rear sealing portion 320 may protrude down below the receiving portion 310. In this instance, the protruded part may be referred to as a protruding portion 321. The protruding portion 321 may be formed in the process of folding and sealing the case. The protruding portion 321 may be in the shape of a bat ear.

The battery cell 300 may include a plurality of battery cells. The plurality of battery cells 300 may be stacked along the left-right direction or Y axis direction.

The upper plate 110 may have a square or rectangular plate shape. The upper plate 110 may include a first flat portion 113. The receiving portion 310 may be placed on the first flat portion 113. The plurality of battery cells 300 may be arranged, located or stacked along the left-right direction or Y axis direction. The receiving portions 310 of the plurality of battery cells 300 may be placed on the first flat portion 113. Alternatively, the folding portions 340 of the plurality of battery cells 300 may be placed on the first flat portion 113.

The upper plate 110 may include a main groove 111. The main groove 111 may be referred to as an accommodation portion 111 or an avoidance portion 111. The main groove 111 may be extended along the left-right direction or Y axis direction. The upper plate 110 may include a pair of main grooves 111. The main groove 111 may be formed by bending a part of the upper plate 110 in the downward direction. A pair of main grooves 111 may be arranged along the front-rear direction or X axis direction.

The battery cell 300 may include the battery cell 300 including the receiving portion 310 having the electrode assembly and the sealing portion 320 extended from the receiving portion 310; and the upper plate 110 having the first flat portion 113 on which the receiving portion 310 is placed and the main groove 111 configured to accommodate at least part of the sealing portion 320.

The lower plate 120 may have a square or rectangular plate shape. The lower plate 120 may be fastened, coupled, fixed or attached to the lower surface of the upper plate 110.

By this configuration of the present disclosure, thermal safety of the battery assembly may improve. As the protruding portion 321 of the battery cell 300 is received in the main groove 111, it may be possible to avoid interference or friction between the protruding portion 321 and the upper plate 110. Accordingly, it may be possible to prevent damage to the protruding portion 321.

Referring to FIGs. 1 to 4, the battery assembly may include the heat sink 100, a connection member 200, a side wall 600, a busbar frame assembly 500, the plurality of battery cells 300 and a pad 400.

The plurality of battery cells 300 and the pad 400 may be located on the heat sink 100. The heat sink 100 may have a square or rectangular plate shape.

The side wall 600 may be located on each of the left side and the right side of the plurality of battery cells 300. The bottom of the side wall 600 may be fastened, coupled, fixed or attached to the heat sink 100.

The busbar frame assembly 500 may be located on each of the front side and the rear side of the plurality of battery cells 300. The bottom of the busbar frame assembly 500 may be fastened, coupled, fixed or attached to the heat sink 100. Additionally, the busbar frame assembly 500 may be fastened, coupled, fixed or attached to the side wall 600.

The following description is made based on the front busbar frame assembly 500. The busbar frame assembly 500 may include a frame 510, a busbar 520 and a connect board 530. The frame 510 may form the exterior of the busbar frame assembly 500. The frame 510 may be extended in the left-right direction or Y axis direction. Each of left and right ends of the frame 510 may be fastened, coupled, fixed or attached to the side wall 600. A plurality of busbars 520 may be disposed on the front side of the frame 510. The plurality of busbars 520 may be arranged along the left-right direction or Y axis direction. The plurality of busbars 520 may be physically and electrically connected to electrode leads 330 of the plurality of battery cells 300. The connect board 530 may be disposed along the left-right direction or Y axis direction. The connect board 530 may be physically and electrically connected to the plurality of busbars 520.

The pad 400 may be located between the plurality of battery cells 300. The pad 400 may have a plate shape. The pad 400 may be extended in the front-rear direction or X axis direction. The pad 400 may include a plurality of pads. The pad 400 may include a silicone material. The pad 400 may absorb shocks that may occur between the plurality of battery cells 300. Additionally, the pad 400 may reduce the expansion pressure when swelling occurs in the battery cell 300.

In this instance, the plurality of battery cells 300 and the plurality of pads 400 may be referred collectively to as a cell module assembly.

The connection member 200 may be located between the plurality of battery cells 300 and the heat sink 100.

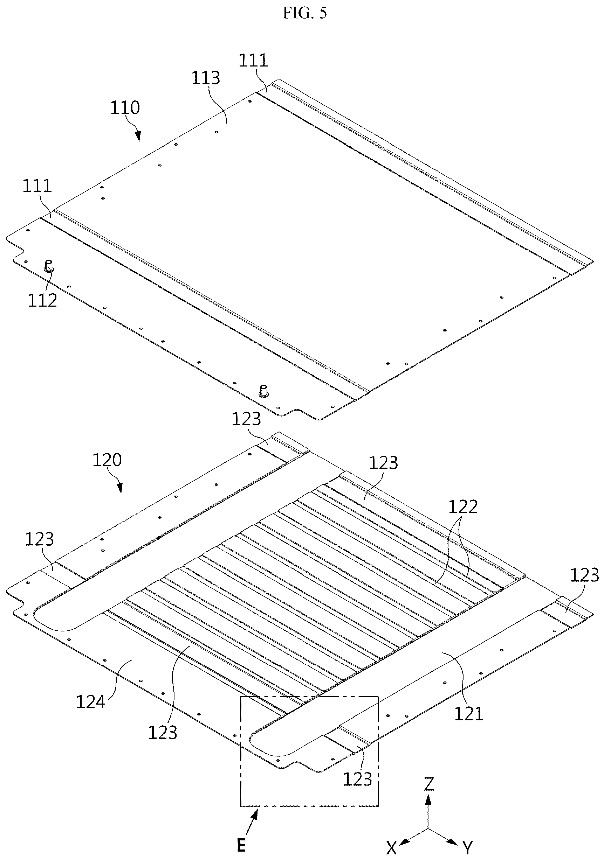

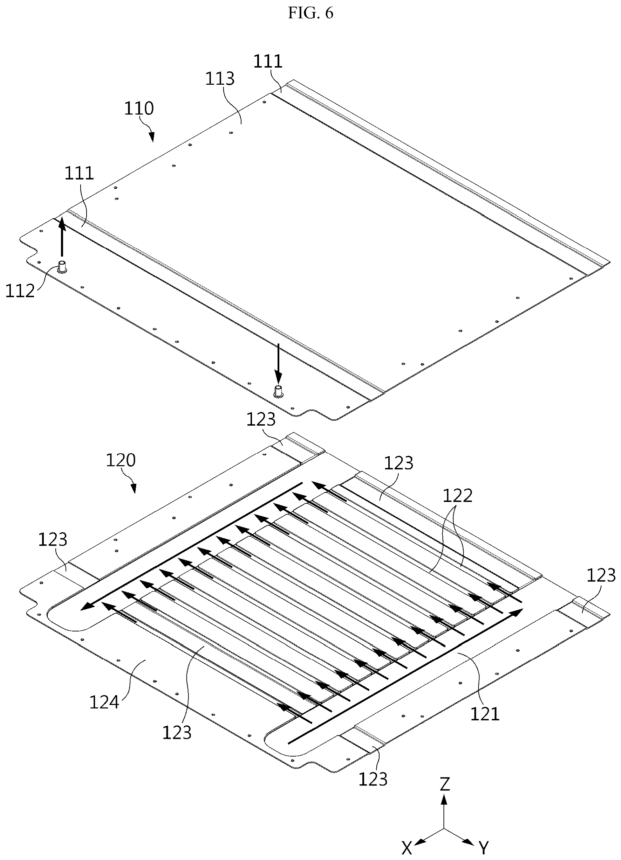

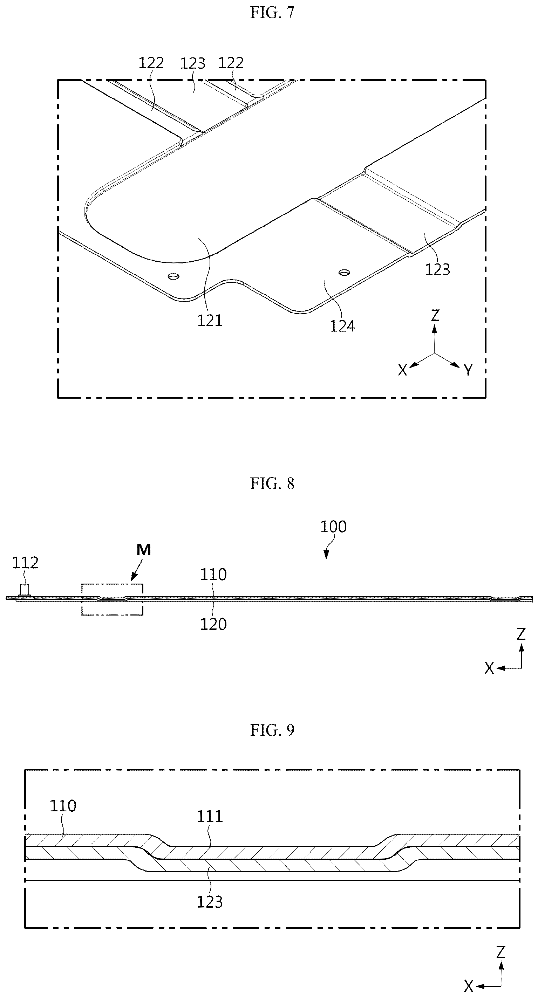

FIG. 5 is an exploded view showing some components of the heat sink 100 of FIG. 4. FIG. 6 is a diagram showing a flow of cooling fluid in FIG. 5. FIG. 7 is an enlarged view of section E in FIG. 5. Referring to FIGs. 4 to 7, a cooling channel may be formed between the upper plate and the lower plate of the battery assembly according to an embodiment of the present disclosure. The heat sink 100 may include the upper plate 110 and the lower plate 120. The cooling fluid may flow in the cooling channel of the heat sink. The cooling fluid may cool down heat generated from the plurality of battery cells 300.

By this configuration of the present disclosure, the heat sink 100 may maintain the cooling effect without damage to the protruding portion 321. Accordingly, thermal stability of the battery assembly may improve.

FIG. 8 is a cross-sectional view of FIG. 4, taken along the line K-K'. FIG. 9 is an enlarged view of section M in FIG. 8. Referring to FIGs. 4 to 9, the main groove 111 of the battery assembly according to an embodiment of the present disclosure may protrude downward, and the lower plate 120 may have a coupling groove 123 in which the main groove 111 is received.

The lower plate 120 may include the coupling groove 123. The coupling groove 123 may be formed by bending a part of the lower plate 120 in the downward direction. The coupling groove 123 may be extended along the left-right direction or Y axis direction. The coupling groove 123 may include a pair of coupling grooves. The pair of coupling grooves 123 may be arranged in the front-rear direction or X axis direction. The pair of coupling grooves 123 may be located to match the pair of main grooves 111, respectively. The front main groove 111 may be received in the front coupling groove 123. Additionally, the rear main groove 111 may be received in the rear coupling groove 123.

By this configuration of the present disclosure, the coupling of the heat sink 100 may be improved.

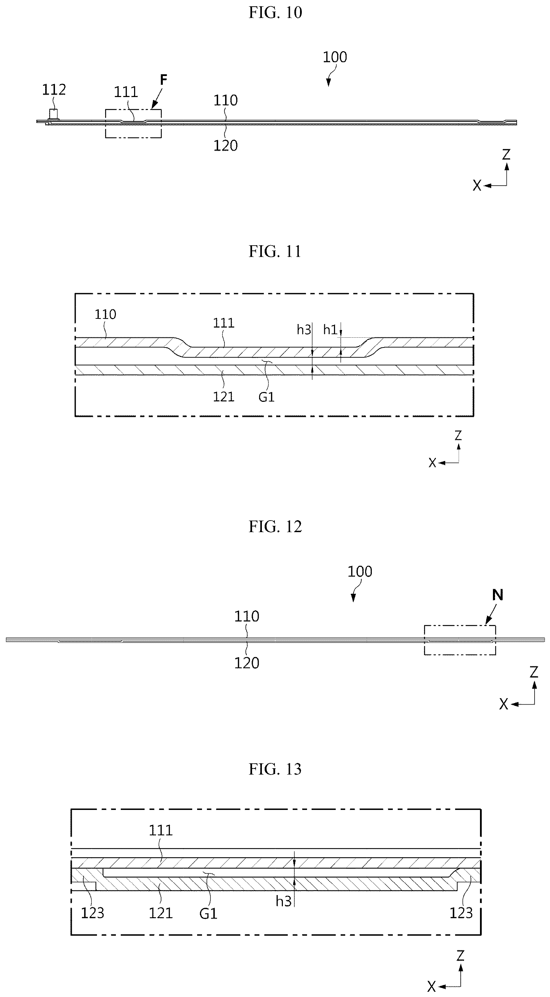

FIG. 10 is a cross-sectional view of FIG. 4, taken along the line C-C'. FIG. 11 is an enlarged view of section F in FIG. 10. FIG. 12 is a cross-sectional view of FIG. 4, taken along the line L-L'. FIG. 13 is an enlarged view of section N in FIG. 12.

Referring to FIGs. 4 to 13, the lower plate 120 of the battery assembly according to an embodiment of the present disclosure may have a first groove 121 extended in the front-rear direction. Additionally, the cooling channel may be formed between the main groove 111 and the first groove 121.

The lower plate 120 may include a second flat portion 124. The lower plate 120 may include the first groove 121. The first groove 121 may be formed by bending a part of the lower plate 120 in the downward direction. The first groove 121 may form the flow channel in which the cooling fluid flows. The first groove 121 may be extended along the front-rear direction or X axis direction. The first groove 121 may include a pair of first grooves. The pair of first grooves 121 may be arranged along the left-right direction or Y axis direction.

The first groove 121 and the main groove 111 may be located facing each other. The first groove 121 and the main groove 111 may be spaced apart from each other by a predetermined distance h3. Alternatively, a gap G1 may be formed between the first groove 121 and the main groove 111. In this instance, the gap G1 between the first groove 121 and the main groove 111 may act as the cooling channel.

Additionally, the depth of the first groove 121 may be deeper than the coupling groove 123. Accordingly, the gap G1 may be formed between the first groove 121 and the main groove 111. Additionally, the main groove 111 may be formed with a depth h1 of about 2 mm to 3 mm compared to the flat portion.

By this configuration of the present disclosure, the heat sink 100 of the present disclosure may have the cooling channel extended across the main groove 111. The heat sink 100 may maintain the cooling effect without damage to the protruding portion 321. Accordingly, thermal stability of the battery assembly may improve.

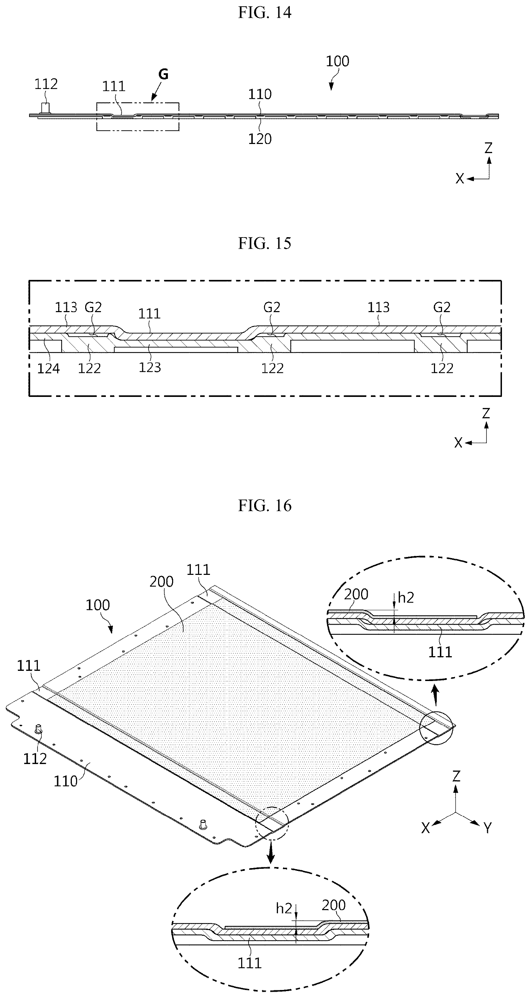

FIG. 14 is a cross-sectional view of FIG. 4, taken along the line D-D'. FIG. 15 is an enlarged view of section G in FIG. 14. Referring to FIGs. 4, 14 and 15, the lower plate 120 may have a plurality of second grooves 122 extended in the left-right direction and arranged in the front-rear direction. Additionally, the cooling channel may be formed between the upper plate 110 and the plurality of second grooves 122.

The lower plate 120 may include the second flat portion 124. The lower plate 120 may include the second groove 122. The second groove 122 may be formed by bending a part of the lower plate 120 in the downward direction. The second groove 122 may form the flow channel in which the cooling fluid flow. The second groove 122 may be extended along the left-right direction or Y axis direction. Alternatively, the second groove 122 may be extended along the main groove 111. The second groove 122 may include a plurality of second grooves. The plurality of second grooves 122 may be arranged along the front-rear direction or X axis direction.

The second groove 122 and the flat portion 113 may be located facing each other. The second groove 122 and the flat portion 113 may be spaced apart from each other by a predetermined distance. Alternatively, a gap G2 may be formed between the second groove 122 and the flat portion 113. In this instance, the gap G2 between the second groove 122 and the flat portion 113 may act as the cooling channel.

By this configuration of the present disclosure, the heat sink 100 of the present disclosure may have the cooling channel extended along the main groove 111. The heat sink 100 may maintain the cooling effect without damage to the protruding portion 321. Accordingly, thermal stability of the battery assembly may improve.

Referring to FIGs. 4, 14 and 15, the main groove 111 of the battery assembly according to an embodiment of the present disclosure may be located between the adjacent second grooves 122 among the plurality of second grooves 122. Alternatively, the coupling groove 123 may be located between the adjacent second grooves 122. The coupling groove 123 may be formed across the first groove 121.

The main groove 111 may be received in the coupling groove 123. The coupling groove 123 may stably support the main groove 111. Additionally, the coupling groove 123 may be deeper than the second groove 122.

Some of the plurality of second grooves 122 may be located adjacent to the main groove 111. For example, the coupling groove 123 may lead to the pair of second grooves 122 from the front and rear sides. Alternatively, the coupling groove 123 may be located between the pair of second grooves 122 or may connect the pair of second grooves 122.

By this configuration of the present disclosure, the heat sink 100 may maintain the cooling effect without damage to the protruding portion 321. Accordingly, thermal stability of the battery assembly may improve.

Referring to FIGs. 5 to 15, the plurality of second groves 122 of the battery assembly according to an embodiment of the present disclosure may bring the pair of first grooves 121 into communication with each other. Additionally, the plurality of second grooves 122 may be located between the pair of first grooves 121.

By this configuration of the present disclosure, the heat sink 100 may maintain the cooling effect without damage to the protruding portion 321. Accordingly, thermal stability of the battery assembly may improve.

Referring to FIGs. 6 to 15, the upper plate 110 of the battery assembly according to an embodiment of the present disclosure may include a port 112 in communication with the first groove 121. The upper plate 110 may have the port 112 in the upper surface on the front side. The port 112 may include a pair of ports. The port 112 may act as a passage where the cooling fluid enters or exits.

The port 112 of the upper plate 110, the first groove 121 and the second groove 122 may be in communication with each other to form the flow channel of the cooling fluid. For example, the cooling fluid coming in through the right port 112 may flow in the rearward direction or -X axis direction along the right first groove 121. Additionally, the cooling fluid may flow from the right first groove 121 into the second groove 122. The cooling fluid entering the second groove 122 may flow in the leftward direction or -Y axis direction. The cooling fluid leaving the second groove 122 may enter the left first groove 121. The cooling fluid entering the left first groove 121 may flow along the forward direction or +X axis direction, and exit the heat sink 100 along the left port 112.

By this configuration of the present disclosure, the heat sink 100 may maintain the cooling effect without damage to the protruding portion 321. Accordingly, thermal stability of the battery assembly may improve.

FIG. 16 is a diagram showing the heat sink 100 and the connection member 200 of the battery assembly of FIG. 1. Referring to FIG. 16, the battery assembly according to an embodiment of the present disclosure may include the connection member 200 disposed between the plurality of battery cells 300 and the upper plate 110.

The connection member 200 may be disposed on the upper surface of the upper plate 110. For example, the connection member 200 may be a lubricant such as a grease or a resin. The connection member 200 may be applied to the upper surface of the upper plate 110 with a uniform thickness.

The connection member 200 may act as an adhesion member. The connection member 200 may adhere or fix the plurality of battery cells 300 to the upper plate 110. The connection member 200 may adhere or fix the receiving portion 310 or the folding portion 340 of the plurality of battery cells 300 to the upper plate 110.

Additionally, the connection member 200 may act as a heat transfer member. The connection member 200 may transfer heat generated from the plurality of battery cells 300 to the upper plate 110. Accordingly, cooling performance of the battery assembly may improve.

Additionally, the connection member 200 may be disposed on the first flat portion 113 and the main groove 111. The connection member 200 may be applied to the first flat portion 113 and the main groove 111 with a uniform thickness. In this instance, a height difference h2 between the connection member 200 applied to the main groove 111 and the connection member applied to the first flat portion 113 may be about 2 mm to 3 mm.

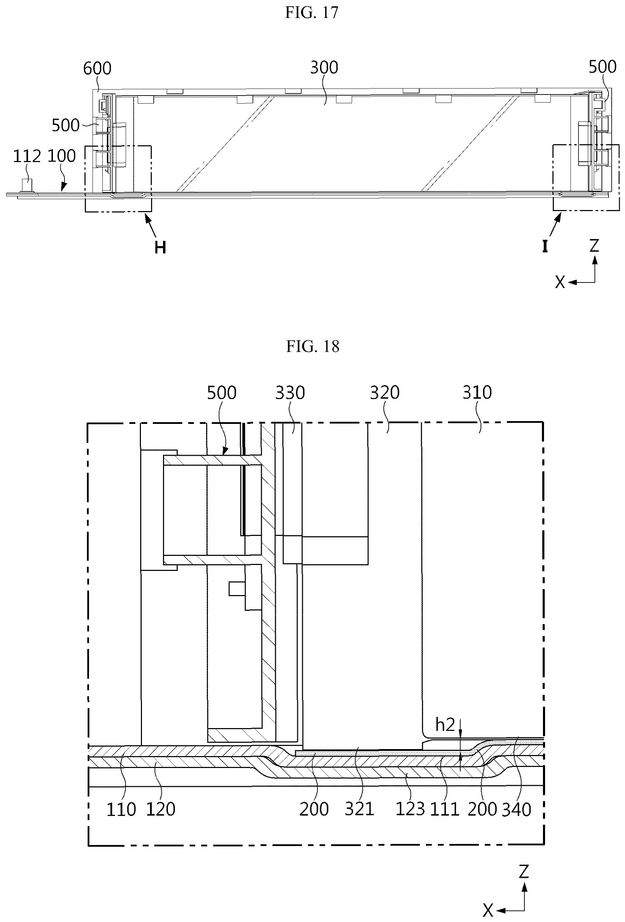

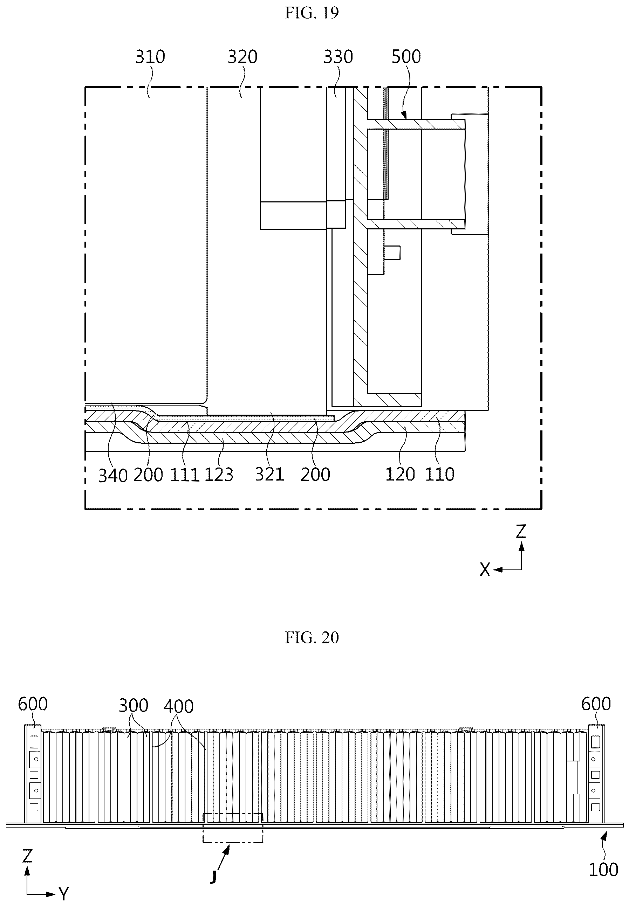

FIG. 17 is a cross-sectional view of FIG. 1, taken along the line A-A'. FIG. 18 is an enlarged view of section H in FIG. 17. FIG. 19 is an enlarged view of section I in FIG. 17.

Referring to FIGs. 17 to 19, the receiving portion 310 or the folding portion 340 of the battery cell 300 may be located on the first flat portion 113. Additionally, the connection member 200 may be disposed between the receiving portion 310 or the folding portion 340 and the first flat portion 113. Additionally, at least part of the front side of the receiving portion 310 or the folding portion 340 may be located facing the main groove 111. Additionally, at least part of the rear side of the receiving portion 310 or the folding portion 340 may be located facing the main groove 111. In this instance, the gap h2 between the connection member 200 applied to the receiving portion 310 or the folding portion 340 and the connection member 200 applied to the main groove 111 may be about 2 mm to 3 mm.

The protruding portion 321 may be received in the main groove 111. Additionally, the protruding portion 321 may not contact the main groove 111. Alternatively, the protruding portion 321 may be spaced apart from the main groove 111. The connection member 200 may be disposed between the protruding portion 321 and the main groove 111. The connection member 200 may contact the protruding portion 321. The connection member 200 may fix the protruding portion 321. Additionally, the connection member 200 may transfer heat generated from the protruding portion 321 to the main groove 111.

By this configuration of the present disclosure, the protruding portion 321 is protruded lower than the receiving portion 310, but may not interfere with the upper plate 110 by the main groove 111. Accordingly, it may be possible to prevent cracks or damage to the protruding portion 321 due to friction, and improve thermal safety of the battery cell 300.

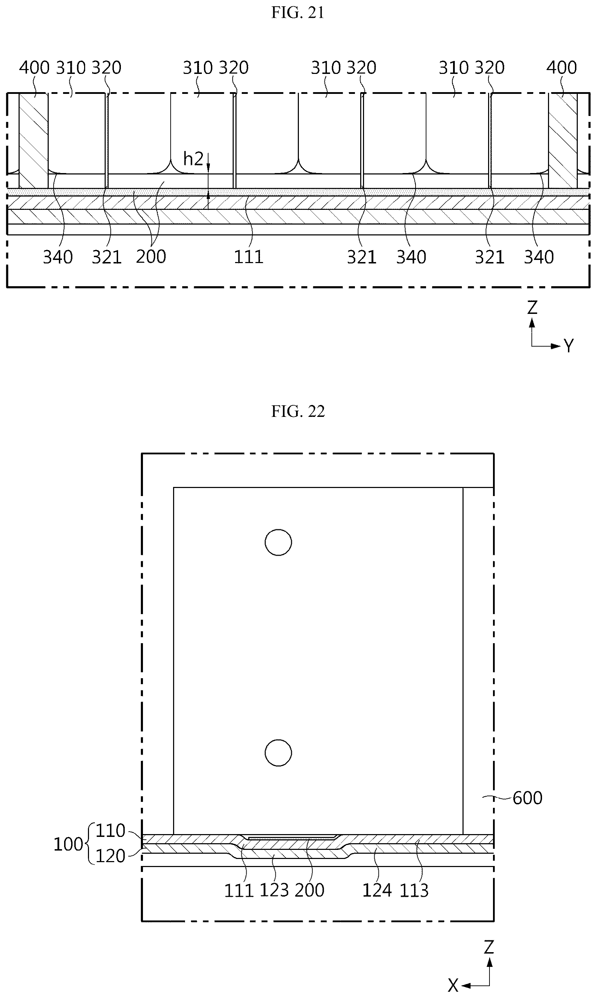

FIG. 20 is a cross-sectional view of FIG. 1, taken along the line B-B'. FIG. 21 is an enlarged view of section J in FIG. 20. Referring to FIGs. 20 and 21, the plurality of protruding portions 321 of the plurality of battery cells 300 arranged in the left-right direction or Y axis direction may be received in the main groove 111. The protrusion length of the protruding portion 321 may vary depending on the production tolerance of the battery cell 300. The main groove 111 may be formed with a sufficient depth to accommodate the protruding portion 321 having different protrusion lengths.

Additionally, the connection member 200 may be located between the pad 400 and the upper plate 110. Alternatively, the connection member 200 may be located between the pad 400 and the first flat portion 113. The connection member 200 may adhere or fix the bottom of the pad 400 to the upper plate 110.

FIG. 22 is an enlarged view of section P in FIG. 1. The battery assembly according to an embodiment of the present disclosure may include the side wall 600. The bottom of the side wall 600 may be fastened, coupled, fixed or attached to the heat sink 100. A gap may be formed between the side wall 600 and the main groove 111. The inside of the battery assembly may be exposed through the gap between the side wall 600 and the main groove 111.

By this configuration of the present disclosure, heat generated from the plurality of battery cells 300 may be vented through the gap between the side wall 600 and the main groove 111.

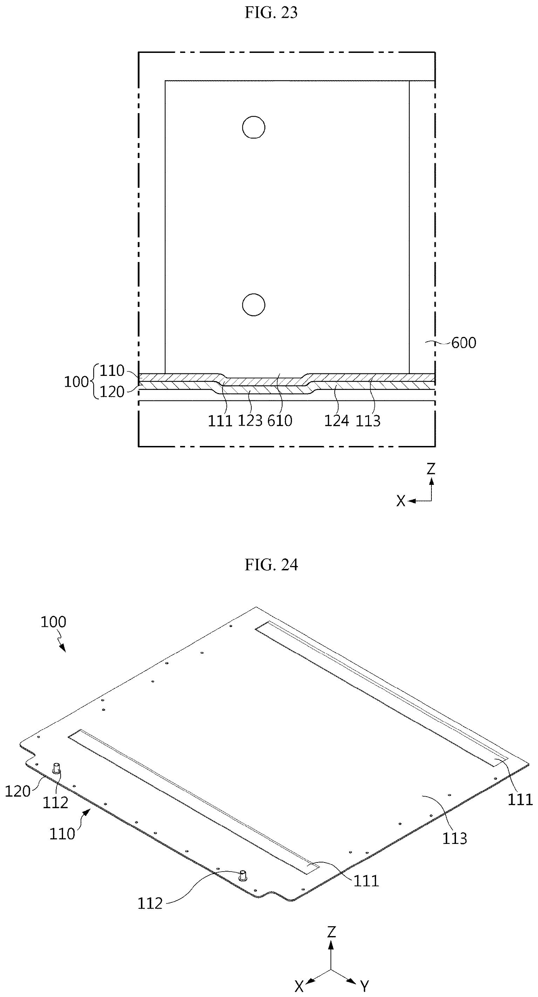

FIG. 23 is a diagram showing a variation of FIG. 22. The side wall 600 of the battery assembly according to an embodiment of the present disclosure may include a protrusion 610. The protrusion 610 may be formed on bottom of the side wall 600. The protrusion 610 may be received in the main groove 111. Additionally, the protrusion 610 may seal the gap between the main groove 111 and the side wall 600.

By this configuration of the present disclosure, sealing performance of the battery assembly may improve.

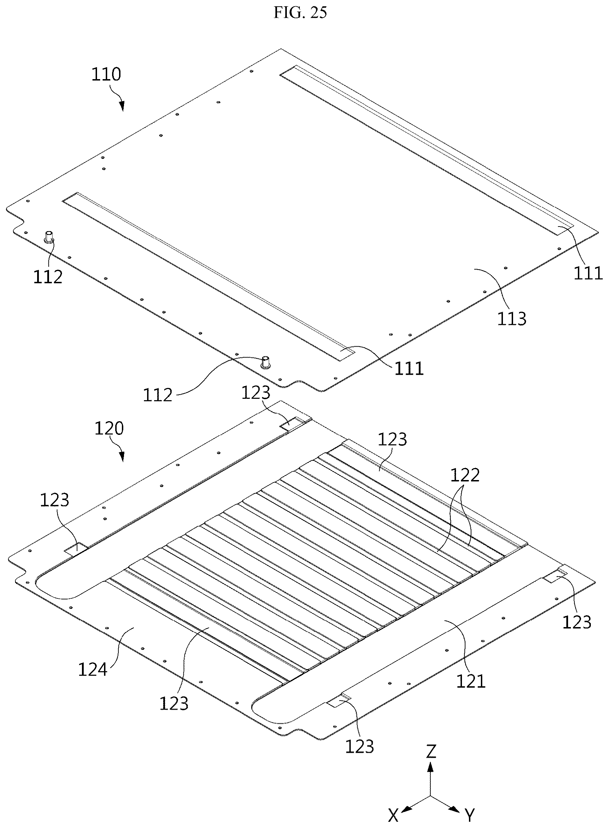

FIG. 24 is a diagram showing the heat sink 100 of the battery assembly according to another embodiment of the present disclosure. FIG. 25 is an exploded view showing some components of the heat sink 100 of FIG. 24.

Referring to FIGs. 24 and 25, the heat sink 100 according to another embodiment of the present disclosure may include the main groove 111. The main groove 111 may be formed at a part of the upper plate 110. Alternatively, the main groove 111 may be surrounded by the first flat portion 113. Alternatively, the length of the main groove 111 may be smaller than the width of the upper plate 110 in the left-right direction or Y axis direction.

Additionally, the coupling groove 123 may be formed corresponding to the length of the main groove 111. The length of the coupling groove 123 and the length of the main groove 111 may be substantially equal. The coupling groove 123 may be formed at a part of the lower plate 120. Alternatively, the coupling groove 123 may be surrounded by the second flat portion 124. Alternatively, the length of the coupling groove 123 may be smaller than the width of the lower plate 120 in the left-right direction or Y axis direction.

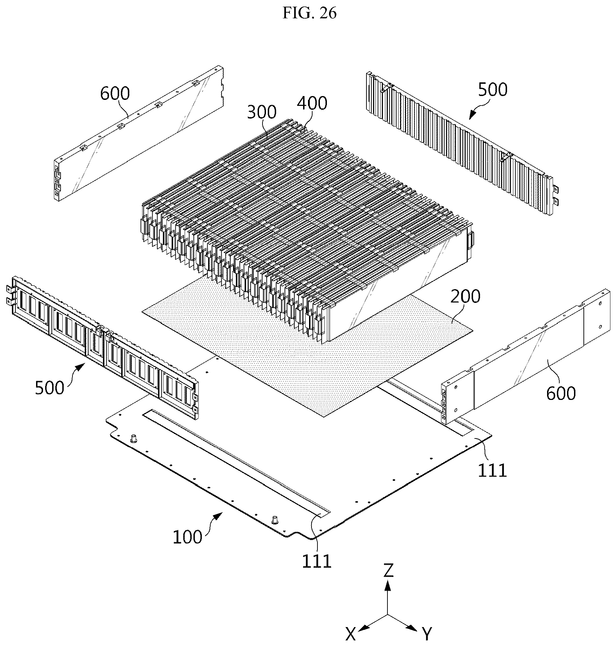

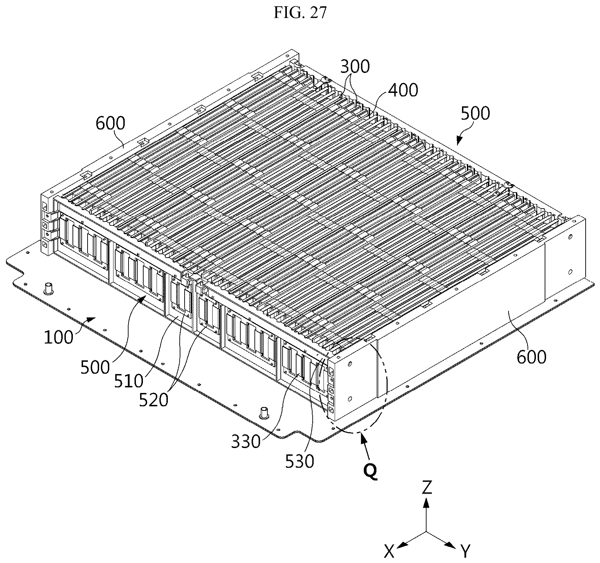

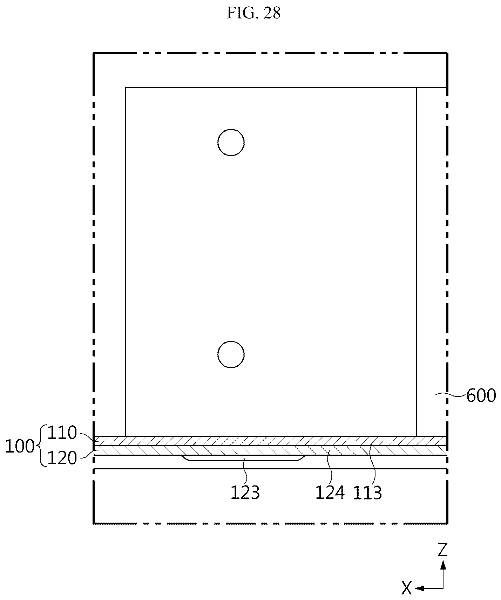

FIG. 26 is an exploded view showing some components of the battery assembly according to another embodiment of the present disclosure. FIG. 27 is a diagram showing the battery assembly according to another embodiment of the present disclosure. FIG. 28 is an enlarged view of section Q in FIG. 27.

Referring to FIGs. 26 to 28, the bottom of the side wall 600 may be fastened, coupled, fixed or attached to the first flat portion 113 of the upper plate 110. The gap may not be formed between the side wall 600 and the first flat portion 113. Alternatively, the main groove 111 may be located between a pair of side walls 600.

By this configuration of the present disclosure, sealing performance of the battery assembly may improve.

The battery assembly of the present disclosure may refer to a battery module or a battery pack according to additional components and structure.

A battery container according to the present disclosure may include the battery assembly according to the present disclosure. The battery assembly may include a plurality of battery assemblies. The battery container may include a container housing. The container housing may provide an accommodation space in which the battery assembly is received. Additionally, the battery container may include a control unit to control the plurality of battery assemblies. In addition, the battery container may further include a sensor to detect the condition of the battery assembly or a fire fighting module to control a thermal event.

An energy storage system (ESS) according to the present disclosure may include the battery assembly according to the present disclosure. The energy storage system may include a plurality of battery containers. Additionally, the battery container may include a plurality of battery assemblies. The energy storage system may include a predetermined number of battery containers combined with a control container to form a link group. For example, the control container may control or diagnose the entire battery container. Additionally, the control container may include a direct current (DC) part, an alternating current (AC) part and a battery system controller (BSC) part to control the battery container. Each control container may be connected to a power conversion system (PCS).

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery assembly comprising:
a plurality of battery cells stacked in a left-right direction, each battery cell including a receiving portion having an electrode assembly and a sealing portion extended frontward from the receiving portion;
an upper plate having a flat portion on which the plurality of battery cells is placed and a main groove extended in the left-right direction and accommodating at least part of the sealing portion; and
a lower plate coupled to a lower surface of the upper plate.

2. The battery assembly according to claim 1, wherein a cooling channel is formed between the upper plate and the lower plate.

3. The battery assembly according to claim 1, wherein the main groove protrudes downward, and
wherein the lower plate has a coupling groove accommodating the main groove.

4. The battery assembly according to claim 1, wherein the lower plate has a first groove extended in a front-rear direction, and
wherein a cooling channel is formed between the main groove and the first groove.

5. The battery assembly according to claim 4, wherein the upper plate includes a port in communication with the first groove.

6. The battery assembly according to claim 4, wherein the lower plate has a plurality of second grooves extended in the left-right direction and arranged in a front-rear direction, and
wherein the cooling channel is formed between the upper plate and the plurality of second grooves.

7. The battery assembly according to claim 6, wherein the main groove is located between adjacent second grooves among the plurality of second grooves.

8. The battery assembly according to claim 6, wherein the plurality of second grooves and the first groove are in communication with each other.

9. The battery assembly according to claim 1, wherein the sealing portion has a protruding portion protruded downward and received in the main groove.

10. The battery assembly according to claim 1, further comprising:
a connection member disposed between the plurality of battery cells and the upper plate.

11. The battery assembly according to claim 1, further comprising:
a side wall coupled to the upper plate, and having a protrusion which is received in the main groove.

12. The battery assembly according to claim 1, further comprising:
a pair of side walls coupled to the upper plate,
wherein the plurality of battery cells and the main groove are located between the pair of side walls.

13. A battery container comprising the battery assembly according to any one of claims 1 to 12.

14. An energy storage system comprising the battery assembly according to any one of claims 1 to 12.
